# EUROPEAN PATENT SPECIFICATION

(11) **EP 2 188 812 B1**
(45) Date of publication and mention of the grant of the patent: **22.05.2013**
(21) Application number: 07805321.2
(22) Date of filing: 06.08.2007
(51) Int. Cl.: G11C 29/00

(54) **CIRCUIT ARRANGEMENT AND METHOD FOR DATA PROCESSING**
SCHALTUNGSANORDNUNG UND VERFAHREN ZUR DATENVERARBEITUNG
AGENCEMENT DE CIRCUIT ET PROCÉDÉ POUR UN TRAITEMENT DE DONNÉES

(30) Priority: 21.08.2006 EP 06119259
(43) Date of publication of application: 26.05.2010
(73) Proprietor: NXP B.V., 5656 AG Eindhoven (NL)
(72) Inventor: BUHR, Wolfgang, 5656 AE Eindhoven (NL); MUELLER, Detlef, 5656 AE Eindhoven (NL)
(74) Representative: Krott, Michel
(86) International application number: PCT/IB2007/053094
(87) International publication number: WO 2008/023297

(56) References cited:
- US-B1- 6 393 504

## Description

### FIELD OF THE INVENTION

The present invention relates to a circuit arrangement according to the preamble of claim 1.

The present invention further relates to a method of processing data to be protected against unauthorized access by means of encryption or decryption according to the preamble of claim 7.

### BACKROUND OF THE INVENTION

Conventionally, redundant storage to data memories is normally implemented within a predefined environment which is fully inflexible with respect to efficient memory usage and amount of data redundancy; in other words, either the full memory is implemented with a certain data redundancy or defined parts of the memory are implemented with fixed mapping.

Present page register implementations for instance for non-volatile memories (NV-memories) also are realized in fixed relation to the memory matrix mapping, even for encrypted memory implementation, i. e. for a defined encryption key value each memory location is defined by a fixed sector address, by a fixed page address and by a fixed column address pointing to a memory word with a fixed width.

Real-time configuration of the used data redundancy per word and flexible re-allocation of memory areas with different redundancy levels are not possible with conventional implementations.

For the memory parts which are used in protected redundant mode, i.e. for which each memory address is physically represented by a number of R memory locations (where R is the number of used memory modules for redundant storage of a word), the amount of available memory running in this protected mode decreases by the redundancy factor R.

The described redundancy concept requires the implementation of a minimum number of R separate memory modules, as the redundant storage requires parallel write/read access to the redundant memory areas in order to achieve acceptable access times. This also results in a higher power consumption in comparison to non-redundant data storage.

The memory redundancy concept described in prior art document US 5 604 702 uses two separated memory units, in which data is stored redundantly, and an additional redundancy circuit deciding according to an error signal which of the two memories is accessed. The information about failing memory parts are stored in an additional auxiliary memory.

The approach as disclosed in prior art document US 5 604 702 does not allow a flexible configuration of any memory parts as main memory or redundancy memory, as the main memory unit and the redundancy memory unit are separated memories of fixed size.

The target functionality of the memory concept described in prior art document US 5 996 096 is a "repair-mechanism" for failing volatile-memory (R[andom]A[ccess]M[emory]) cells by replacing them by redundant volatile-memory cells. The information about which failing memory parts have to be replaced are stored in a non-volatile memory (E[lectrically]E[rasable]P[rogrammable]R[ead]O[nly]M[emory], Flash).

The target functionality of the memory concept described in prior art document US 6 807 649 B1 is also a "repair-mechanism" for failing hard-disc drive areas by replacing them by redundant drive areas. The information about which failing disc areas have to be replaced is derived from a parity calculation algorithm.

The memory redundancy concept described in prior art document US 2003/0076714 A1 uses two separated memory units, defined as main memory unit and redundancy memory unit, and an additional redundancy information file unit controlling which parts of the data stored in the whole memory are stored in the main memory unit and which parts of the data stored in the whole memory are stored in the redundancy memory unit.

The target functionality of the memory concept described in prior art document US 2005/0160310 A1 is also a "repair-mechanism" for failing memory cells by replacing them by redundant memory cells. The information about which failing memory rows / memory colums have to be replaced are stored in two different memory units.

US 6 393 504 B 1 discloses a memory device which utilizes a plurality of memory modules coupled in parallel to a master I/O module through a bus. Each memory module has independent address and command decoders to enable independent operation. Thus each memory module is activated by commands on the bus only when a memory access operation is performed within the particular memory module. Each memory module has a programmable identification register which stores a communication address of the module. The communication address for each module can be changed during operation of the memory device by a command from the bus. The memory device includes redundant memory modules to replace defective memory modules. Replacement can be carried out through commands on the bus.

### OBJECT AND SUMMARY OF THE INVENTION

Starting from the disadvantages and shortcomings as described above and taking the prior art as discussed into account, an object of the present invention is to further develop a circuit arrangement of the kind as described in the technical field as well as a method of the kind as described in the technical field in such way that a flexible configuration of any memory parts as main memory or redundancy memory is enabled.

The object of the present invention is achieved by a circuit arrangement comprising the features of claim 1 as well as by a method comprising the features of claim 7. Advantageous embodiments and expedient improvements of the present invention are disclosed in the respective dependent claims.

The present invention is principally based on the idea of a real-time configurable memory redundancy concept for writeable memory clusters. More particularly, the present invention shows a dynamically real-time configurable redundancy concept for writeable memory clusters as well as a security enhancement to be gained by the present invention in case of encrypted writeable memories.

By means of this redundancy concept, on one hand security against physical attacks on the silicon is improved, and on the other hand a data integrity check mechanism to detect data retention errors in related memories is established. The major advantage of the present invention is the flexible real-time configurability of the enhanced security area within the overall memory to adapt the overhead for the redundant data storage, dynamically to the application requirements.

Unlike prior art document US 5 604 702 or prior art document US 2003/0076714 A1, the present invention allows a flexible configuration of any memory parts as main memory or redundancy memory, as the main memory unit and the redundancy memory unit are not separated memories of fixed size.

Unlike prior art document US 5 604 702 or prior art document US 5 996 096 or prior art document US 2005/0160310 A1, according to the target functionality of the present invention parts of the used memory can be configured
- to store data with more or less redundancy to achieve a higher resistance against bit fails caused by security attacks by detecting fail functionality in real-time and
- to react in an appropriate way, for example by way of hardware exceptions.

According to a preferred embodiment of the present invention the data to be secured are stored fully redundantly in physically separate memory modules. In the following, it is described how the dynamically real-time configurable redundancy concept can be implemented:
The following preconditions are recommendable for such implementation of the dynamically real-time configurable redundancy concept:
   - Any amount of physical memory modules in the cluster is possible for the implementation. The only precondition is that the number of related physical memories is a product of the data redundancy factor R, i. e. R, 2*R, 4*R, 6*R, etc.
   - The organisation of subsequent memory accesses ahould be parallel in units smaller than the memory size, for example in case of two memory modules one word is located in the first memory, the second word is located in the second memory, the third word is located in the first memory again, the fourth word is located in the second memory again, and so on. Also larger subsequent data units can be used from both memories, for example 64 bytes of subsequent data in the first memory, the next 64 bytes of subsequent data in the second memory, then the next 64 bytes of subsequent data in the first memory again, then the next 64 bytes of subsequent data in the second memory again, and so on. Those parallel data memory units will be called "page" in the following descriptions.

Unlike a conventional redundant storage of data being related to a fixed predefined memory configuration, the present invention shows a method for a dynamically real-time configurable memory redundancy configuration.

In normal operation mode the related memories advantageously operate as plain memories as known from various applications. But in memory-redundancy operation, by means of a definition of a certain address range, for example by registers, the addressing range being defined in this way causes a redundant storage of data within this defined range by writing the data in parallel to R memory modules on the same logical address.

Reading the data is done under the same conditions, i. e. the data are read in parallel from these R memory modules on the same logical address. After reading the data, the read data are expediently compared for identity. The read access is validated if all parallel read data are identical, or invalidated if inconsistencies between any read data were detected.

The available memory space S for this redundant memory space is S = m /R,
- with m being the total number of memory modules available, and
- with R being the redundancy factor, i. e. the number of memory modules used in parallel.

By this, a part of the addressing space available in plain operation mode is not useable; preferably, such side effect can be handled for instance by an appropriate exception handling. The granularity G for the configuration of the redundant mode is G = n * R,
- with n being the number of bytes in a page, and
- with R being the redundancy factor, i. e. the number of memory modules used in parallel.

The memory range to be used in redundant mode can advantageously be reconfigured at any time, provided that the redundant range is not currently used. If the redundant mode range is just extended to any direction, data written to the previously defined redundant mode range remain valid.

Any data previously written to the normal memory area, which is now added to the redundant mode area are lost, i. e. can no longer be read due to the fact that most likely the same data is not present in all redundancy related memory modules, which leads to a read error.

If the data redundancy is implemented in the preferred way as described above, the data written redundantly to the memory modules can also be read without redundancy after reconfiguring the redundancy control circuitry. For security reasons it can be useful to suppress the ability to read redundant written data in plain.

This issue is addressed by the following expedient part of the present invention. A full memory address comprises two address parts:
- the column address being the lower part of the address, and
- a page address being the upper part of the address.

The following preconditions are recommendable for this part of the present invention:
- independent memory data and/or address encryption with separated column and page encryption of the related memory modules with independent encryption keys; and
- possibility to use a second set of keys for all related memory modules.

If the protected area of configurable data storage is preferably written in redundant mode the second set of encryption keys for data and/or for column address has to be used by the encryption unit; incidentally, such second set of encryption keys is not possible for page address.

By this, the data written to the memory modules is advantageously encrypted with another key than for normal data write access. Therefore, data written in redundant mode cannot be read in normal mode because the encryption unit will use a different key to decrypt the data and will deliver wrong plain text.

Using different column address / data encryption keys for the memory modules operating in redundant mode, the physical address of the words in a page and the stored data is different in all related memory modules.

This may increase the security level against physical attacks to the memories even more because applying the same manipulation to related redundant memory locations in parallel would mean a significantly increased effort if the topological conditions are different for all related memories.

In order to be able to even detect irregularities identically applied to all memory modules, for example light flash attacks, the data should be stored inversely in at least one of the related memory modules although the encryption will help against such attack as well.

The advantage of the security concept according to the present invention is that it allows a flexible real-time configuration of the implemented memory into protected memory parts (redundant mode) and into non-protected memory parts (normal mode) by the system software, for instance by the operating system.

The applied security level can also be configured in several steps by chosing
- the redundancy level R, i. e. the number of memory modules addressed in parallel, and
- the module specific encryption keys.

The present invention can be applied for all kind of writeable memory, like R[andom]A[ccess]M[emory] or N[on-]V[olatile] memory; for example, such memory can be implemented in an identification device, such as in a U[niversal]S[erial]B[us] token, in a contact chip card or in an enhanced smart card with 32 bit computing platform, such chip card or smart card comprising a powerful and flexible architecture and offering a wide range of memory configurations and security features, including cryptographic co-processors for D[ata]E[ncryption]S[tandard] / A[dvanced]E[ncryption]S[tandard] encryption and P[ublic]K[ey]I[nfrastructure] encryption.

The present invention is suited to any high performance application requiring large memory and high security covering third generation (3G) wireless communications, banking, m[obile]-commerce, e[lectronic]-business and secure network access.

The present invention is particularly suited for leading-edge U[niversal]I[ntegrated]C[ircuit]C[ard]s, which include
- U[niversal]S[ubscriber]I[dentity]M[odule] applications and
- R[emovable]U[ser]I[nterface]M[odule] applications.

Accordingly, the target functionality as well as the application area of the present invention completely differs from prior art document US 6 807 649 B1.

As already discussed above, there are several options to embody as well as to improve the teaching of the present invention in an advantageous manner. To this aim, reference is made to the claims respectively dependent on claim 1 and on claim 7; further improvements, features and advantages of the present invention are explained below in more detail with reference to a preferred embodiment by way of example and to the accompanying drawings where

### BRIEF DESCRIPTION OF THE DRAWINGS

Fig. 1A schematically shows a diagram of an embodiment of a data write access in the normal operation mode according to the present invention;
Fig. 1B schematically shows a diagram of an embodiment of a data write access in the secured operation mode according to the present invention;
Fig. 2A schematically shows a diagram of an embodiment of a data read access in the normal operation mode according to the present invention; and
Fig. 2B schematically shows a diagram of an embodiment of a data read access in the secured operation mode according to the present invention.

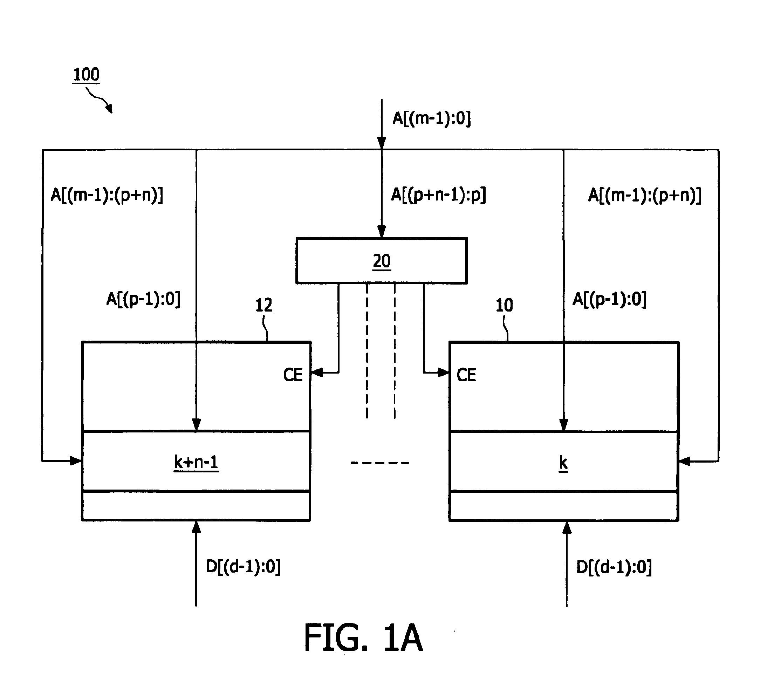

The same reference numerals are used for corresponding parts in Fig. 1A to Fig. 2B.

The first part of the present invention describes a dynamically real-time configurable redundancy concept for writeable memory clusters; the second part of the present invention describes a security enhancement to be gained by the present invention in case of encrypted writeable memories.

By means of this redundancy concept, on one hand security against physical attacks on the silicon is improved, and on the other hand a data integrity check mechanism to detect data retention errors in related memories is established.

The major advantage of the present invention is the flexible real-time configurability of the enhanced security area within the overall memory to adapt the overhead for the redundant data storage, dynamically to the application requirements; with the applied redundant data storage requiring additional memory space.

The implemented memory modules 10, 12, which can be all kind of writeable memory, like read access memory (RAM) or non-volatile memory (NV memory), have an equal width of the respective memory page k+n-1, k and are connected to a common memory interface with a central page register implementation. The page register width is defined as a multiple of the physical memory page width.

### DESCRIPTION OF EMBODIMENTS

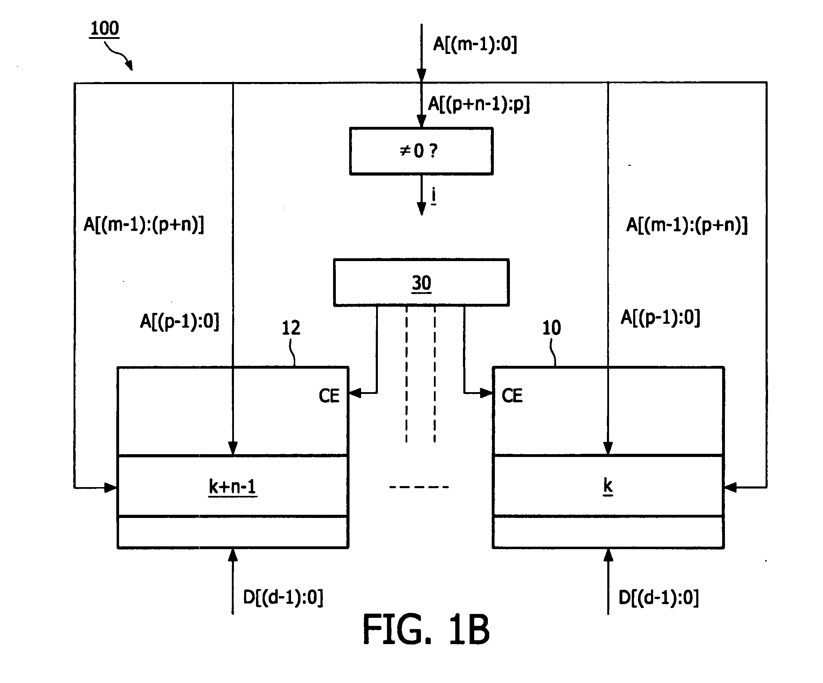

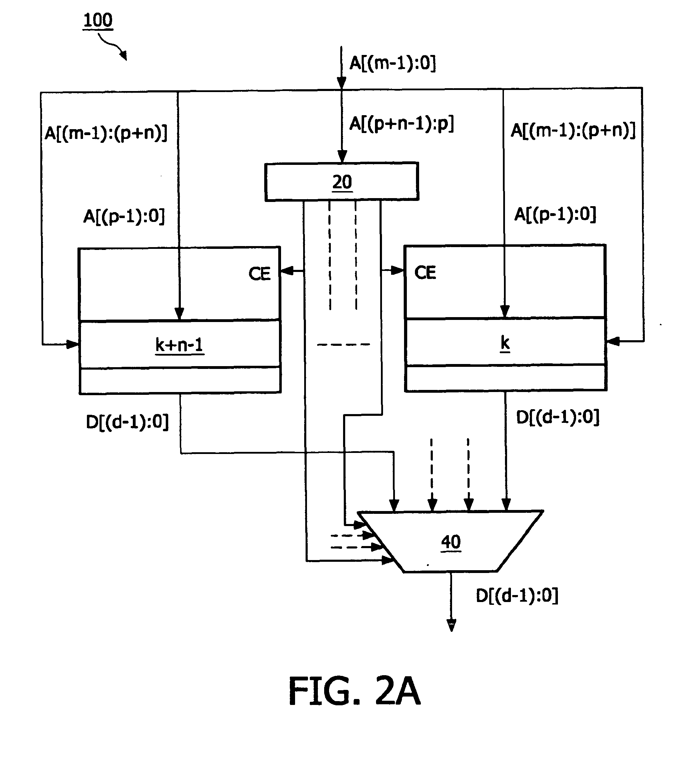

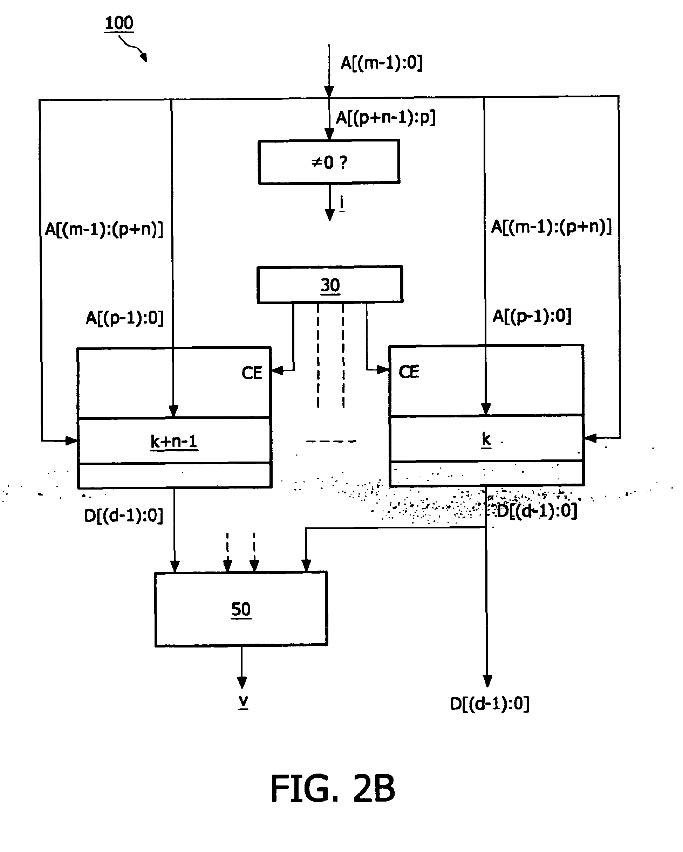

In this context, in Fig. 1A, Fig. 1B, Fig. 2A, Fig. 2B
- 2ⁿ denotes the number of redundant memory modules,
- 2^{m} denotes the memory module size,
- 2^{p} denotes the page size, and
- 2^{d} denotes the data size.

According to the selected memory configuration (normal operation in Fig. 1A and in Fig. 2A; secured operation in Fig. 1B and in Fig. 2B) for the page address currently applied to the memory 10, 12, each page register word location is mapped by the interface to a single physical memory location in one memory module 10, 12 or multiple physical memory locations in a number of memory modules 10, 12.

The number of parallel addressed modules 10, 12 is defined by the selected data redundancy factor R. The maximum possible data redundancy is limited by the hardware implementation of the memory interface, which has to support the parallel write / read data paths and the evaluation of the redundant memory data read in parallel.

Each access of the memory 10, 12 is accompanied by a qualifier signal for the addressed memory page, which indicates to the memory interface if the addressed page shall be treated
- as a normal page, linked to a single physical memory page, or
- as a redundant mode page, linked to multiple physical memory pages, according to the configuration setting.

When writing the page register contents to a redundant mode page, a number of R memory modules 10, 12 are addressed, selected and written to at the same time. Each memory 10, 12 is implemented with an own address / data encryption unit with a unique encryption key used, so that the physical locations of the addressed memory words are different in each of the selected modules 10, 12.

When reading data (cf. Fig. 2A and Fig. 2B) from the memory 10, 12 at a page address, which is indicated as a redundant mode page by the qualifier signal, the data is read in parallel from the same number of R memory modules 10, 12.

An evaluation logic implemented in the memory interface compares all read data words and checks them for equality:
- if no differences are detected, the memory interface completes the read access by passing the data on to the requesting block;
- if any differences between the read data words are found, the read access is seized and a read error is reported by the memory interface.

Depending on the implemented security level chosen to be high with respect to the protection of redundant mode pages against read attacks, in addition to the different encryption keys supplied for the encryption units of the implemented memory modules 10, 12, a second set of those keys can be supplied for redundant mode read / write accesses.

This redundant mode key set includes additional encryption keys for the word-column address and the data words. In this way, data which has been written to a memory module page in redundant mode can only be read back from the memory in redundant mode, otherwise encrypted data will be read from the page.

The sector address and the page address encryption keys for each memory module 10, 12 are always kept equal for both normal mode accesses (cf. Fig. 1A and Fig. 2A) and redundant mode accesses (cf. Fig. 1B and Fig. 2B), to allow an mode-independent page mapping of normal mode page and of redundant mode page in one memory 10, 12 without any overlapping.

By the present invention, existing on-chip memory for example on a customizable, personalized, multi-application chip card or smart card can be used for redundant storage of security relevant data, with a run-time user-defined part of the memory to be redundant in a fully run-time configurable way. In this context, inconsistent contents of the memory modules 10, 12 can be detected (not necessarily repaired), i. e. an error signal is created.

Accordingly, the reading of undefined data from the redundant memory parts can be prevented by means of the embodiments as shown in in Fig. 1A, Fig. 1B, Fig. 2A, Fig. 2B, i.e protected data will either be read correctly or a predefined data value will be returned. This is important because no original data information can be extracted from corrupted data. Finally, the present invention as exemplified in Fig. 1A, Fig. 1B, Fig. 2A, Fig. 2B enables redundant data to be read only in redundant mode, not in plain mode.

### LIST OF REFERENCE NUMERALS

| | |
|---|---|
| 100 | circuit arrangement |
| 10 | memory, in particular memory module |
| 12 | further memory, in particular further memory module |
| 20 | decoding module or decoder |
| 30 | memory selecting module or memory selector |
| 40 | data selecting module or data selector |
| 50 | comparing module or comparator |
| 2^{d} | size of data |
| 2^{m} | size of memory module 10, 12 |
| 2ⁿ | number of redundant memory modules |
| 2^{p} | size of page k, k+n-1 |
| A | access, in particular data write access (cf. Figs 1A, 1B) or data read access (cf. Figs 2A, 2B) |
| i | invalid access |
| k | page |
| k+n-1 | further page |
| R | redundancy factor |
| v | valid data |

## Claims

1. A circuit arrangement (100) for data processing comprising
- at least two memory modules (10, 12) for storing the data to be protected against unauthorized access by means of encryption or decryption;
- at least one memory module interface logic circuit assigned to the memory modules (10, 12)
-- for addressing the memory modules (10, 12) and
-- for writing data to the memory modules (10, 12) or
-- for reading data from the memory modules (10, 12);
wherein
at least one real-time configurable redundancy concept for the memory modules (10, 12) is provided, by which the data to be protected can be stored redundantly in physically separate memory modules (10, 12),
**characterized in that** each memory module (10, 12) is implemented with an own address/data encryption unit with a unique encryption key used.

2. The circuit arrangement (100) according to claim 1, **characterized in that** the memory module (10, 12) is a random access memory module or a non-volatile memory module.

3. The circuit arrangement (100) according to claim 1 or 2, **characterized in**
- **that** in normal operation mode the related memory modules (10, 12) operate as plain memory modules, and
- **that** in memory-redundant or secured operation mode the data is redundantly stored within at least one defined address range, in particular by writing the data in parallel to R memory modules (10, 12) on the same logical address where the redundancy factor R is the number of used memory modules (10, 12) for redundant storage of a data word.

4. The circuit arrangement (100) according to at least one of claims 1 to 3, **characterized in that** the data are read in parallel from R memory modules (10, 12) on the same logical address where the redundancy factor (R) is the number of used memory modules (10, 12) for redundant storage of a data word, and
- that the read data are compared for identity by means of at least one comparing module or comparator (50) connected behind the memory modules (10, 12) wherein
-- the read access is validated (v) if all parallel read data are identical, or
-- the read access is invalidated (i) if inconsistencies between any read data are detected.

5. The circuit arrangement (100) according to at least one of claims 1 to 4, **characterized in that** at least one memory selecting module or memory selector (30) is connected before the memory modules (10, 12).

6. The circuit arrangement (100) according to at least one of claims 1 to 5, **characterized in that** at least one data selecting module or data selector (40) is connected
- behind at least one decoding module or decoder (20), in particular behind at least one "1 from 2ⁿ" decoder, and/or
- behind the memory modules (10, 12).

7. A method of processing data to be protected against unauthorized access by means of encryption or decryption, by means of which method the data are stored in at least two memory modules (10, 12),
wherein
at least one real-time configurable redundancy concept for the memory modules (10, 12) is provided, by which the data can be stored redundantly in physically separate memory modules (10, 12),
**characterized in that** each memory module (10, 12) is implemented with an own address/data encryption unit with a unique encryption key used.

8. The method according to claim 7, **characterized in**
- **that** in normal operation mode the related memory modules (10, 12) operate as plain memory modules, and
- **that** in memory-redundant or secured operation mode the data is redundantly stored within at least one defined address range, in particular by writing the data in parallel to R memory modules (10, 12) on the same logical address where the redundancy factor R is the number of used memory modules (10, 12) for redundant storage of a data word.

9. The method according to claim 7 or 8, **characterized in that** the data are read in parallel from R memory modules (10, 12) on the same logical address where the redundancy factor (R) is the number of used memory modules (10, 12) for redundant storage of a data word, and
- that the read data are compared for identity wherein
-- the read access is validated (v) if all parallel read data are identical, or
-- the read access is invalidated (i) if inconsistencies between any read data are detected.

10. An identification device, in particular a U[niversal]S[erial]B[us] token, a contact chip card or an enhanced smart card, comprising at least one circuit arrangement (100) according to at least one of claims 1 to 6.

## Patentansprüche

1. Eine Schaltkreisanordnung (100) zum Datenverarbeiten, welche aufweist
- zumindest zwei Speichermodule (10, 12) zum Speichern der Daten, die gegen unautorisierten Zugriff mit Hilfe von Verschlüsselung oder Entschlüsselung zu schützen sind;
- zumindest einen Speichermodul-Interface-Logikschaltkreis, welcher den Speichermodulen (10, 12) zugeordnet ist,
-- zum Adressieren der Speichermodule (10, 12) und
-- zum Schreiben von Daten auf die Speichermodule (10, 12) oder
-- zum Lesen von Daten aus den Speichermodulen (10, 12);
wobei
zumindest ein in Echtzeit konfigurierbares Redundanzkonzept für die Speichermodule (10, 12) bereitgestellt ist, mittels welchem die Daten, die zu schützen sind, redundant in physikalisch separaten Speichermodulen (10, 12) gespeichert werden können,
**dadurch gekennzeichnet, dass** jedes Speichermodul (10, 12) mit einer eigenen Adress/Datenverschlüsselungseinheit implementiert ist, wobei ein eindeutiger Verschlüsselungsschlüssel verwendet wird.

2. Die Schaltkreisanordnung (100) gemäß Anspruch 1, **dadurch gekennzeichnet, dass** das Speichermodul (10, 12) ein Random Access Memory-Modul oder ein nicht-flüchtiges Speichermodul ist.

3. Die Schaltkreisanordnung (100) gemäß Anspruch 1 oder 2, **dadurch gekennzeichnet,**
- **dass** in einem normalen Operationsmodus die zugehörigen Speichermodule (10, 12) als einfache Speichermodule operieren, und
- **dass** in einem speicherredundanten oder gesicherten Operationsmodus die Daten innerhalb zumindest eines definierten Adressbereichs redundant gespeichert werden, insbesondere mittels parallelen Schreibens der Daten auf der gleichen Logikadresse in R Speichermodulen (10, 12), wobei der Redundanzfaktor R die Anzahl der verwendeten Speichermodule (10, 12) für ein redundantes Speichern eines Datenworts ist.

4. Die Schaltkreisanordnung (100) gemäß zumindest einem der Ansprüche 1 bis 3, **dadurch gekennzeichnet, dass** die Daten auf der gleichen Logikadresse parallel aus R Speichermodulen (10, 12) gelesen werden, wobei der Redundanzfaktor (R) die Anzahl der verwendeten Speichermodule (10, 12) für ein redundantes Speichern eines Datenworts ist, und
- dass die gelesenen Daten mit Hilfe von zumindest einem Vergleichsmodul oder Komparator (50) auf eine Identität verglichen werden, welcher hinter den Speichermodulen (10, 12) verbunden ist, wobei
-- der Lesezugriff validiert (v) wird, falls alle parallel gelesenen Daten identisch sind,
oder
-- der Lesezugriff invalidiert (i) wird, falls Inkonsistenzen zwischen beliebigen gelesenen Daten detektiert werden.

5. Die Schaltkreisanordnung (100) gemäß zumindest einem der Ansprüche 1 bis 4, **dadurch gekennzeichnet, dass** zumindest ein Speicherauswahlmodul oder Speicherselektor (30) vor den Speichermodulen (10, 12) verbunden ist.

6. Die Schaltkreisanordnung (100) gemäß zumindest einem der Ansprüche 1 bis 5, **dadurch gekennzeichnet, dass** zumindest ein Datenauswahlmodul oder Datenselektor (40) verbunden ist
- hinter zumindest einem Entschlüsselungsmodul oder Dekoder (20), insbesondere hinter zumindest einem "1 aus 2ⁿ" Dekoder, und/oder
- hinter den Speichermodulen (10, 12).

7. Ein Verfahren zum Verarbeiten von Daten, die gegen unautorisierten Zugriff mit Hilfe von Verschlüsselung oder Entschlüsselung zu schützen sind, mit Hilfe von welchem Verfahren die Daten in zumindest zwei Speichermodulen (10, 12) gespeichert werden,
wobei
zumindest ein in Echtzeit konfigurierbares Redundanzkonzept für die Speichermodule (10, 12) bereitgestellt wird, mittels welchem die Daten, die zu schützen sind, redundant in physikalisch separaten Speichermodulen (10, 12) gespeichert werden können,
**dadurch gekennzeichnet, dass** jedes Speichermodul (10, 12) mit einer eigenen Adress/Datenverschlüsselungseinheit implementiert wird, wobei ein eindeutiger Verschlüsselungsschlüssel verwendet wird.

8. Das Verfahren gemäß Anspruch 7, **dadurch gekennzeichnet,**
- **dass** in einem normalen Operationsmodus die zugehörigen Speichermodule (10, 12) als einfache Speichermodule operieren, und
- **dass** in einem speicherredundanten oder sicheren Operationsmodus die Daten innerhalb zumindest eines definierten Adressbereichs redundant gespeichert werden, insbesondere mittels parallelen Schreibens der Daten auf der gleichen Logikadresse in R Speichermodulen (10, 12), wobei der Redundanzfaktor R die Anzahl der verwendeten Speichermodule (10, 12) für ein redundantes Speichern eines Datenworts ist.

9. Das Verfahren gemäß Anspruch 7 oder 8, **dadurch gekennzeichnet, dass** die Daten auf der gleichen Logikadresse parallel aus R Speichermodulen (10, 12) gelesen werden, wobei der Redundanzfaktor (R) die Anzahl der verwendeten Speichermodule (10, 12) für ein redundantes Speichern eines Datenworts ist, und
- dass die gelesenen Daten auf eine Identität verglichen werden, wobei
-- der Lesezugriff validiert (v) wird, falls alle parallel gelesenen Daten identisch sind,
oder
-- der Lesezugriff invalidiert (i) wird, falls Inkonsistenzen zwischen beliebigen gelesenen Daten detektiert werden.

10. Eine Identifikationsvorrichtung, insbesondere ein U[niversal]S[erial]B[us] Token, eine Kontaktchipkarte oder eine erweiterte Smartkarte, welche zumindest eine Schaltkreisanordnung (100) gemäß zumindest einem der Ansprüche 1 bis 6 aufweist.

## Revendications

1. Agencement de circuit (100) pour le traitement de données comprenant
- au moins deux modules de mémoire (10, 12) pour stocker les données à protéger contre des accès non autorisés avec des moyens de chiffrement ou de déchiffrement ;
- au moins un circuit logique d'interface de module de mémoire affecté aux modules de mémoire (10, 12)
- pour l'adressage des modules de mémoire (10, 12) et
- pour l'écriture de données vers les modules de mémoire (10, 12) ou
- pour la lecture de données à partir des modules de mémoire (10,12) ;
dans lequel il est prévu
au moins un concept de redondance configurable en temps réel pour les modules de mémoire (10, 12), grâce auquel les données à protéger peuvent être stockées de manière redondante dans des modules de mémoire séparés physiquement (10, 12),
**caractérisé par le fait que** chaque module de mémoire (10, 12) est réalisé avec sa propre unité de chiffrement d'adresses et de données avec une utilisation d'une clé de chiffrement exclusive.

2. Agencement de circuit (100) selon la revendication 1, **caractérisé par le fait que** le module de mémoire (10, 12) est un module de mémoire à accès aléatoire ou un module de mémoire non volatile.

3. Agencement de circuit (100) selon les revendications 1 ou 2, **caractérisé par le fait**
- **que** dans un mode de fonctionnement normal, les modules de mémoire (10, 12) fonctionnent en tant que modules de mémoire normaux, et
- **que** dans un mode de redondance de mémoire ou de fonctionnement sécurisé, les données sont stockées de manière redondante dans au moins une plage d'adresses définies, en particulier grâce à l'écriture en parallèle vers R modules de mémoire (10, 12) à la même adresse logique, dans lequel le facteur de redondance R est le nombre de modules de mémoire (10, 12) utilisés pour le stockage redondant d'un mot de données.

4. Agencement de circuit (100) selon l'une au moins des revendications 1 à 3, **caractérisé par le fait que** les données sont lues en parallèle à partir de R modules de mémoire (10,12) à la même adresse logique, dans lequel le facteur de redondance (R) est le nombre de modules de mémoire (10, 12) utilisés pour le stockage redondant d'un mot de données, et
- que l'identité des données de lecture est comparée à l'aide d'au moins un module de comparaison ou comparateur (50) raccordé derrière les modules de mémoire (10, 12) dans lequel
-- l'accès en lecture est validé (v) si toutes les données lues en parallèle sont identiques, ou
-- l'accès en lecture est invalidé (i) si des incohérences sont détectées entre des données lues quelconques.

5. Agencement de circuit (100) selon l'une au moins des revendications 1 à 4, **caractérisé par le fait qu'**au moins un module de sélection de mémoire ou un sélecteur de mémoire (30) est raccordé devant les modules de mémoire (10, 12).

6. Agencement de circuit (100) selon l'une au moins des revendications 1 à 5, **caractérisé par le fait qu'**au moins un module de sélection de données ou un sélecteur de données (40) est raccordé
- derrière au moins un module de décodage ou décodeur (20), en particulier derrière au moins un décodeur "1 parmi 2ⁿ", et/ou
- derrière les modules de mémoire (10, 12).

7. Procédé de traitement de données à protéger contre des accès non autorisés avec des moyens de chiffrement ou de déchiffrement, procédé grâce auquel les données sont stockées dans au moins deux modules de mémoire (10, 12),
dans lequel il est prévu
au moins un concept de redondance configurable en temps réel pour les modules de mémoire (10, 12), grâce auquel les données à protéger peuvent être stockées de manière redondante dans des modules de mémoire séparés physiquement (10, 12),
**caractérisé par le fait que** chaque module de mémoire (10, 12) est réalisé avec sa propre unité de chiffrement d'adresses et de données avec une utilisation d'une clé de chiffrement exclusive.

8. Procédé selon la revendication 7, **caractérisé par le fait**
- **que** dans un mode de fonctionnement normal, les modules de mémoire correspondants (10, 12) fonctionnent en tant que modules de mémoire normaux, et
- **que** dans un mode de redondance de mémoire ou de fonctionnement sécurisé, les données sont stockées de manière redondante dans au moins une plage d'adresses définies, en particulier grâce à l'écriture en parallèle vers R modules de mémoire (10, 12) à la même adresse logique, dans lequel le facteur de redondance R est le nombre de modules de mémoire (10, 12) utilisés pour le stockage redondant d'un mot de données.

9. Procédé selon les revendications 7 ou 8, **caractérisé par le fait que** les données sont lues en parallèle à partir de R modules de mémoire (10, 12) à la même adresse logique, dans lequel le facteur de redondance (R) est le nombre de modules de mémoire (10, 12) utilisés pour le stockage redondant d'un mot de données, et **par le fait**
- **que** l'identité des données de lecture est comparée, dans lequel
-- accès en lecture est validé (v) si toutes les données lues en parallèle sont identiques, ou
-- l'accès en lecture est invalidé (i) si des incohérences sont détectées entre des données lues quelconques.

10. Dispositif d'identification en particulier "jeton" U[niversal] S[erial] B[us], carte à puce avec contact ou carte à puce évoluée, contenant au moins un agencement de circuit (100) selon l'une au moins des revendications 1 à 6.
